Europäisches Patentamt

European Patent Office

Office européen des brevets

(11) Publication number: **0 303 205**
**A2**

## (12) EUROPEAN PATENT APPLICATION

(21) Application number: 88112823.5

(22) Date of filing: 05.08.88

(51) Int. Cl.4: **B21B 27/00 , C04B 35/10 , C04B 35/48 , C04B 35/56 , C04B 35/58**

(30) Priority: 12.08.87 JP 199789/87

(43) Date of publication of application:
15.02.89 Bulletin 89/07

(84) Designated Contracting States:
**DE GB**

(71) Applicant: **HITACHI, LTD.**
**6, Kanda Surugadai 4-chome Chiyoda-ku**
**Tokyo(JP)**

(72) Inventor: **Nakagawa, Mitsuo**
**3-2, Shiraume 2-chome**
**Mito-shi Ibaraki 310(JP)**
Inventor: **Taguchi, Mituo**
**94-12, Oohira Takasaka-machi Uchigo**
**Iwaki-shi Fukushima 973(JP)**
Inventor: **Sobue, Masahisa**
**433-75, Yonezawa-cho**
**Mito-shi Ibaraki 310(JP)**

(74) Representative: **Strehl, Schübel-Hopf,**
**Groening, Schulz**
**Maximilianstrasse 54 Postfach 22 14 55**
**D-8000 München 22(DE)**

(54) **Ceramic dull roll for rolling mill and method of producing the same.**

(57) A sintered ceramic dull roll for rolling mill essentially consists of 80 to 50 vol% of a first ingredient such as SiC, $Si_3N_4$, sialon, $Al_2O_3$ and $ZrO_2$ and 20 to 50 vol% of second ingredient such as the carbides, nitrides and borides of transition elements of the groups IVa, Va and VIa of the periodic table, and has a density of not less than 96% of theoretical density, the first and second ingredients are so selected that the difference in the Young's modulus between the first and second ingredients is not more than $2 \times 10^6$ bar, the amount of the second ingredient is further so selected that the electric resistivity of the sintered ceramic dull roll is not more than $1 \times 10^{-2}$ Ωcm and the surface of the roll has a uniform surface roughness of not less than 6 μm, whereby the sintered ceramic dull roll has a long life.

# CERAMIC DULL ROLL FOR ROLLING MILL AND METHOD OF PRODUCING THE SAME

The present invention relates to a sintered ceramic dull roll for rolling mill suitable for manufacturing a rolled product having a matted surface and applied for plating and coating, and also relates to a method of producing the sintered ceramic dull roll for rolling mill.

## Background of the Invention

Conventionally, a steel dull roll, in that, with minute grains formed on its surface, was used for manufacturing a rolled product having a matted surface. The minute grains on the steel roll surface were formed by shot blasting or electro spark machining called dull treatment. However when manufacturing a stainless steel plate having a matted or a satin surface by using such steel dull roll, the rolling operation has to be stopped after manufacturing every 1000m rolled plate for exchanging or removing the rolls, since the rolls have been worn so much as to have a flat surface. The time and cost for exchanging the worn rolls for a spare steel dull rolls and for dull-treating the worn rolls again during the rolling operation are too large to be disregarded such that the productivity of the rolled product having a matted surface by the steel dull roll is much decreased.

Japanese Patent Laid-Open No. 59-197307(1984), which corresponds to U.S. Patent Application Serial No. 601,358 filed on April 18, 1984 and European Patent Publication No. 0123490 published on September 9, 1987 and the both were assigned to the same assignee of the present invention, discloses a long life sintered ceramic work roll for rolling mill which essentially consists of silicon carbide, silicon nitride, sialon, alumina or zirconia. Since such sintered ceramic work roll has a high electrical insulation property, hardness and rigidity, it was difficult to form grains on its surface by the conventional methods such as shot blasting and electro spark machining. It was possible to dull-treat the surface of such sintered ceramic work roll by grinding for a long time with a diamond grinding wheel. This method, however, is disadvantageous in that the dull treatment on the roll is not easy, and in that since the directional property of abrasion at the time of grinding inevitably remains, the quality of the rolled products is deteriorated.

Japanese Patent Application Laid-Open Nos. 57-196770(1982), 57-200265(1982) and 59-207881(1984) disclose respectively sintered ceramic products adaptable to electro spark machining, each essentially consisting of silicon carbide and 0.5 - 30 vol% of oxides, carbides, nitrides and borides of elements of the groups IVa, Va and VIa of the periodic table; silicon nitride and 0.5 - 30 vol% of oxides, carbides nitrides and borides of elements of the groups IVa, Va and VIa of the periodic table; and sialon and 15 - 50 vol% of oxides, carbides, nitrides and borides of elements of the groups IVa, Va and VIa of the periodic table. However no consideration is disclosed in the above three Japanese Patent Application Laid-Opens to a sintered ceramic roll product for rolling mill which requires a high mechanical strength and a high oxidation resistance.

## Summary of the Invention

One object of the present invention is to provide a sintered ceramic dull roll for rolling mill having a long life and capable of subjecting to dull treatment with other than grinding such as electro spark machining, selective electrolytic corrosion and selective chemical corrosion.

Another object of the present invention is to provide a method of producing a sintered ceramic dull roll for rolling mill having a long life and capable of subjecting to dull treatment with other than grinding such as electro spark machining, selective electrolytic corrosion and selective chemical corrosion.

The feature of the present invention lies in a sintered ceramic dull roll for a rolling mill characterized in that a non-metallic sintered body which contains as the main ingredient at least one selected from the group consisting of silicon carbide, silicon nitride, sialon, alumina and zirconia as a first ingredient and at least one selected from the group consisting of the carbides, nitrides and borides of transition elements of the groups IVa, Va and VIa of the periodic table as a second ingredient, the first and second ingredients are so selected that the difference in the Young's modulus between the first and second ingredients is not more than $2 \times 10^6$ bar and further the amount of the second ingredient is so selected that the electric resistivity of the non-metallic sintered body is not more than $1 \times 10^{-1}$ Ωcm, and the non-metallic sintered body has a density of not less than 96% of the theoretical density and is made into a shape of a roll having a uniform surface roughness of not less than 6 μm.

The feature of the present invention also lies in a method of producing a sintered ceramic dull roll for rolling mill characterized by the steps of:

pressure molding a powder composition which contains as the main ingredient at least one selected from the group consisting of silicon carbide, silicon nitride, sialon, alumina and zirconia as a first ingredient and at least one selected from the group consisting of the carbides, nitrides and borides of transition elements of the groups IVa, Va, and VIa of the periodic table as a second ingredient into a shape of a roll, wherein the first and second ingredients are so selected that the difference in the Young's modulus between the first and second ingredients is not more than $2 \times 10^6$ bar and further the amount of the second ingredient is so selected that the electric resistivity of the non-metallic sintered body is not more than $1 \times 10^{-1}$ Ωcm; sintering the molded roll so as to have a density of not less than 96% of the theoretical density; grinding the sintered roll surface into a uniform surface roughness of below 2,5 μm; and machining the grinded roll surface by electro spark machining so as to form a uniform surface roughness of not less than 6 μm.

The roll for a rolling mill according to the present invention is used as work roll, but it is not prevented to be used as a back-up roll.

The second ingredient is dispersed uniformly in the sintered ceramic roll so as to provide a uniform electrical conductivity therefor, thereby enabling uniform minute grains to be produced on the roll surface by electro spark machining.

In the present invention, compounds having a high electrical conductivity such as TiC, TiN, TiB₂, ZrC, ZrN, ZrB₂, HfC, HfN, HfB₂, NbC, NbN, NbB₂, TaC, TaN, TaB₂, WC and VC are preferable as the second ingredient.

The mixing amount is preferably 80 to 50 vol% of the first ingredient and 20 to 50 vol% of the second ingredient. If the mixing amount of second ingredient is less than 20 vol%, the electric resistivity is not adequately lowered for electro spark machining forming desirable grains on the roll surface. Although there is a little difference depending on the material to be mixed, addition of 20 vol% to 30 vol% of the second ingredient rapidly lowers the electric resistivity of the sintered ceramic roll.

The electric resistivity for electro spark machining for forming desirable grains on the roll surface is not more than $1 \times 10^{-1}$ Ωcm, preferably not more than $1 \times 10^{-2}$ Ωcm.

With an electro spark machining device a discharge voltage of about 20 to 60 V and a discharge current of about 0.5 to 8 A are sufficient for dull treatment of the sintered ceramic roll of the present invention.

The degree of dull treatment may be selected as desired in accordance with the purpose, but a surface roughness not less than 6 μm is sufficient for manufacturing rolled plates or sheets having uniform matted surfaces or satin surfaces applicable for plating or coating. The surface roughness is defined by the distance between the top of the projection and the bottom of the recess of the rough surface.

In order to use a roll as a roll for a rolling mill, the sintered body is required to have a density of not less than 96% of the theoretical density, preferably not less than 97%. If this condition is not satisfied, it is impossible to obtain a long-life roll.

In order to provide the sintered body with a density of not less than 96% of the theoretical density, it is necessary that the particle diameter of the ceramic material which is the main ingredient is appropriate. The material powder therefore preferably has an average particle diameter of 0.2 to 50 μm, more preferably 0.2 to 25 μm.

If the particle diameter of the material powder is less than 0.2 μm, the powder is apt to scatter and difficult to handle while mixing it. On the other hand, if the particle diameter is larger than 50 μm, it is difficult to increase the density and a high pressure is required in producing a sintered body.

One of the significant criteria for selecting a second ingredient is its hardness. Generally, the higher the hardness of a ceramic sintered body is, the more excellent the wear resistance is. However, since the hardness and the Young's modulus are proportional, if materials having greatly different hardnesses are mixed with each other, difference is produced in the Young's modulus, since a stress acting on a grain boundary between constituent grains of different materials, in other words an interphase stress, is propotional to the difference in Young's modulus of the two, such that when the interphase strees exceeds a critical strength, a micro crack generates therebetween and which may lead to a dropping away of the constituent grains and/or a rupture of the roll.

As a result of the microscopic observation of the difference in the Young's modulus of various materials for a sintered body and the state of generation of a micro crack on the sintered bodies, it has been found that the limit of the difference in the Young's modulus between the first and second ingredients is $2 \times 10^6$ bar, and the difference is preferably not more than $1.5 \times 10^6$ bar. Examples of preferable combination of the first and second ingredients of the present invention are sialon-TiC, sialon-TiN, sialon-ZrB₂, Si₃N₄-TiC, Si₃N₄-TiN, Si₃N₄-ZrB₂, SiC-TiC, SiC-TiN, SiC-TiB₂, SiC-ZrB₂, Al₂O₃-TiC, Al₂O₃-TiN, Al₂O₃-TiB₂ and Al₂O₃-

$ZrB_2$.

Vickers hardness of the sintered body is preferably in the range of 1,300 to 3,500 kgf mm$^2$ (1.3 ... 3.5 x 10$^6$ bar).

In order to produce a sintered body having a density of not less than 96% of the theoretical density, pressure sintering is preferable. As a pressure sintering method, there are, for example, a hot press method and a hot isostaic pressing (HIP) method. The hot press method is a method of mixing a material powder, pre-molding it under an atmospheric pressure or while being pressurized, charging the pre-molded product into a die and heating it at a predetermined temperature for sintering while being mechanically pressurized.

The HIP method is a method of pre-molding a material powder, and heating it at a predetermined temperature for sintering in an inert gas such as nitrogen or argon gas while being pressurized.

As to the sintering temperature, in the case of using silicon nitride as the first ingredient and mixing 50 vol% of TiN as the second ingredient, the density of the sintered body rapidly increases and approaches the theoretical density by sintering the mixture at 1400° C or a higher temperature.

The composition ratio between the first and second ingredients after sintering is substantially the same as that before sintering.

A roll for a rolling mill bends during the use because it is used in the state of being loaded. Furthermore, in the case of being used for hot rolling, the roll swells due to thermal expansion. When the roll is deformed, the thickness of the rolled plate in the widthwise direction becomes nonuniform; the plate thickness becomes thicker at the central portion in the widthwise direction than at the end portions, or conversely the plate thickness becomes thinner at the central portion in the widthwise direction than at the end portions. To prevent such nonuniformity of the thickness of the rolled plate caused by the deformation of the roll during rolling, it is possible to provide a crown to the roll. The crown may be either a convex crown or a concave crown, and it is preferable that the appropriate crown is selected in accordance with rolling conditions. The thickness of the initial crown provided to a roll of the present invention is not more than 300 μm/100 mm, whether it is a convex crown or a concave crown. Since the deformation of the sintered ceramic roll of the present invention due to thermal expansion is very small, it is unnecessary to make the initial crown larger than 300 μm/100 mm.

The sintered ceramic dull roll of the present invention has a Vickers hardness of Hv 1,3000 to 3,500 kgf/mm$^2$ (1.3... 3.5 x 10$^5$ bar) on the roll surface, which is much higher than that of a steel roll. Owing to such high hardness, the roll of the present invention can be used semipermanently for rolling stainless steel, mild steel, etc. almost without being worn. Use of the roll of the present invention brings about the following advantages. Since the surface of the roll of the present invention is non-metallic, the material being rolled does not adhere to the roll, in other words, the roll is excellent in resistance to adhesion, thereby having a long working life. Furthermore, even when mis-rolling occurs, for example, an abnormal slip between roll and strip or a strip folding and rolling, since adhesion between the ceramic material and the material being rolled, namely, a metal is unlikely to be caused, there is little danger of the work roll adhering to the material being rolled. In this case, even if the surface of the work roll is heated to as high a temperature as 1,000° C, since the structural stability of a ceramic material is much higher than a steel material, there is little possibility of the ceramic material being deteriorated.

The ceramic roll exhibits an excellent durability as a work roll for hot rolling because it has a high strength and a high oxidation resistance even at 1,000° C, for example. Particularly, a ceramic roll made of a non-oxidic material is also excellent in resistance to acids.

It is generally possible to reduce the energy required for rolling and to roll a material to a thinner sheet by using a work roll having a larger elastic modulus. It is therefore possible to reduce the rolling energy and improve the thin sheet rollability by using the roll of the present invention as a work roll, since the roll according to the present invention has a Young's modulus of 1.5 to 2 times larger than that of a steel roll.

Use of a ceramic roll as a work roll and a steel roll as a back-up roll produces the following effects as compared with use of a combination of ceramic rolls. When ceramic rolls are brought into contact, the deformations of both rolls at the contacting portions are so small as to produce a high contact pressure. On the other hand, when a ceramic roll is brought into contact with a steel roll, the deformation of the steel roll having a lower elastic modulus becomes larger, so that the contact area increases, thereby reducing the contact pressure. As a result, it is possible to enhance the reliability with respect to spalling and so forth. Furthermore when a ceramic roll is combined with a steel roll, since the both rolls elastically deform in such manner as the ceramic roll encroachs on the steel roll, the frictional resistance between the rolls increases, thereby preventing the slip between the rolls.

In a roll according to the present invention, the entire part of the roll may be formed of the above-described sintered body. Alternatively, a roll may be a composite roll in which only the surface layer of the roll barrel is formed of the sintered body and the other part is formed of another material. A method of making a composite roll is not restricted. One of the preferred methods is a method of making a sleeve of the above-described sintered body and fitting the sleeve over a core material made of steel or another material. As a method of securing the sleeve to the core material, shrink fitting, screwing, fixing with an adhesive and the like are adaptable.

Sintering aids, not more than 7 wt% may be added to the first and second ingredients of the present invention. As a sintering aid when silicon carbide is used as the main ingredient, for example, alumina, boron and carbon are usable. As a sintering aid when silicon nitride is used as the main ingredient, for example, magnesia, yttria, beryllia, alumina, aluminium nitride and silica are usable. As a sintering aid when sialon is used as the main ingredient, for example, aluminium nitride and yttria are usable. As a sintering aid when zirconia is used as the main ingredient, yttria is preferably used.

By adding an electric conductivity providing material as the second ingredient to a first ingredient ceramic material having a high insulation property according to the present invention, it has been possible to reduce the electric resistivity without decreasing a hardness and rigidity sufficient for a roll for a rolling mill. Accordingly, it has been possible to subject the roll surface to a uniform dull treatment by electro spark machining.

This is considered to be because the conductive material is dispersed uniformly in the first ingredient, thereby constituting reticulate conductive paths.

It is also because the conductive material is uniformly contained that uniform minute grains on the roll surface are formed by electro spark machining.

Brief Description of the Drawings

Fig. 1 shows a side view of a sintered ceramic dull roll produced in accordance with Example 1 of the present invention.

Fig. 2 shows a schematic arrangement of sintered ceramic dull rolls according to the present invention and of back-up rolls in a four-high rolling mill.

Fig. 3 shows a graph illustrating a relationship between roll surface roughness and rolling length with respect to the roll of the present invention and the conventional steel roll.

Fig. 4 shows a graph illustrating electric resistivity and bending strength of the sintered ceramic dull roll of the present invention with respect to the amount of TiN therein.

Description of the Preferred Embodiments

Experiment 1

SiC, $Si_3N_4$, sialon, $Al_2O_3$ and $ZrO_2$ were used as the first ingredient, and 50 vol% of an electrical conductivity providing material which is the second ingredient was mixed to the respective first ingredients and the resultant mixtures were sintered. The electric resistivity of each of the sintered bodies which had a density of not less than 96% of the theoretical density was measured. The results are shown in Table 1.

Little difference was observed depending on the kind of the first ingredients but there was a slight difference in the electric resistivity depending on the kind of the second ingredients.

Table 1

| Second ingredient | Electric resistivity ($\Omega$-cm) |
|---|---|
| TiC | $1.2 \times 10^{-4}$ to $1.9 \times 10^{-4}$ |
| TiN | $1.7 \times 10^{-4}$ to $7.2 \times 10^{-4}$ |
| TiB$_2$ | $1.3 \times 10^{-3}$ to $5.6 \times 10^{-3}$ |
| ZrB$_2$ | $1.1 \times 10^{-3}$ to $7.3 \times 10^{-3}$ |
| HfB$_2$ | $3.2 \times 10^{-3}$ to $7.0 \times 10^{-3}$ |
| NbC | $7.0 \times 10^{-5}$ to $2.4 \times 10^{-4}$ |
| NbN | $1.0 \times 10^{-4}$ to $4.9 \times 10^{-4}$ |
| NbB$_2$ | $2.2 \times 10^{-4}$ to $8.9 \times 10^{-4}$ |
| TaC | $1.4 \times 10^{-4}$ to $7.4 \times 10^{-4}$ |
| TaN | $3.9 \times 10^{-5}$ to $2.5 \times 10^{-4}$ |
| TaB$_2$ | $5.8 \times 10^{-5}$ to $2.5 \times 10^{-4}$ |

Example 1

50 vol% of TiN having a particle diameter of 1.2 $\mu$m was mixed with sialon having a particle diameter of 0.5 $\mu$m. To 100 parts by volume of the thus-obtained mixture, 3 parts by volume of polyvinyl butyral was mixed as a binder, and the resultant mixture was agglomerated to a particle diameter of 80 $\mu$m by a spray dry method. The powder was pressurized at $1.5 \times 10^5$ bar by using a cold isostatic press to form a pre-molded product about 40 mm in diameter and 350 mm in length. After the pre-molded product was heated at 500 °C for 2 hours and degreased, it was sintered at 1,750 °C for 2 hours in a nitrogen atmosphere.

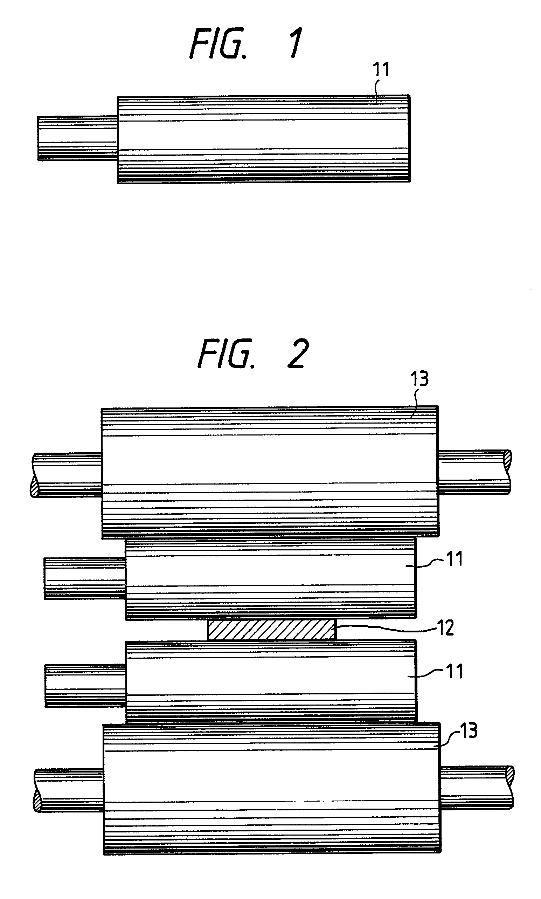

The thus-obtained sintered body was cut and ground to form a roll 11 of 32 mm x 275 mm with a surface roughness of below 2.5 $\mu$m in the shape shown in Fig. 1.

The roll had density of not less than 99% of the theoretical density, an electric resistivity of $4 \times 10^{-5}$ $\Omega$cm, a Vickers hardness of about 1,700 kgf/mm$^2$ ($1.7 \times 10^5$ bar) and a Young's modulus of $3.6 \times 10^6$ bar. Since the Young's modulus of sialon is $3.1 \times 10^6$ bar and the Young's modulus of TiN is $4.2 \times 10^6$ bar, the difference in the Young's modulus is $1.1 \times 10^6$ bar.

The surface of the roll was subjected to dull treatment by using an electro sparking machine (produced by Inoue Japax). The machining condition was that the voltage was 30 V, the current 3 A, the pulse width 10 $\mu$s and the suspension time 60 $\mu$s. In this way, a ceramic dull roll with uniform minute grains formed on the machining surface was obtained. The surface roughness was 8.5 to 8.9 $\mu$m.

The thus-obtained roll 11 was used as a work roll and an alloy steel roll 13 having a Vickers hardness of 900 kgf/mm$^2$ (90 kbar) was used as a back-up roll, and a mild steel plate 12 was rolled by rotating the back-up rolls 13. This embodiment has a structure in which when the back-up rolls 13 are driven to rotate, the ceramic dull rolls 11 are rotated by frictional force, as shown in Fig. 2.

A material being rolled had a thickness of 0.5 mm and a width of 200 mm, and was finished to 0.3 mm by 5-pass rolling.

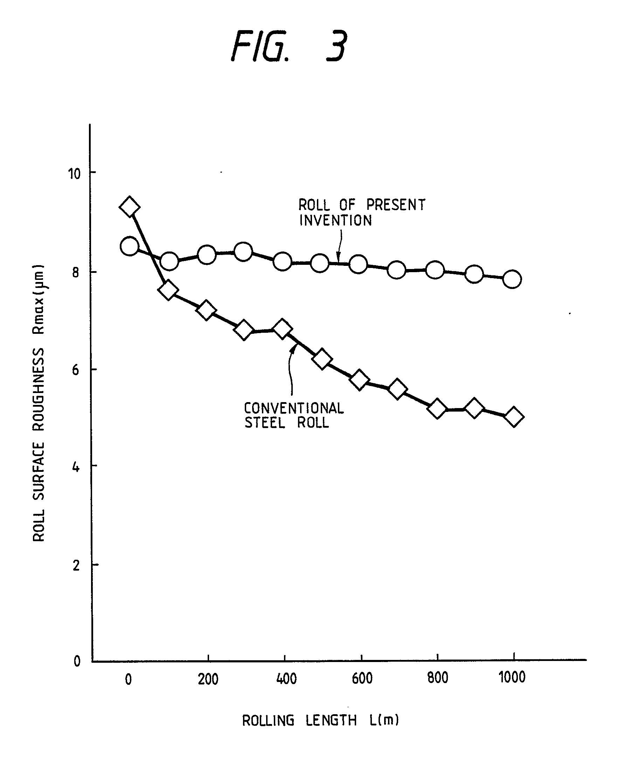

The change in the surface roughness of the roll surface was examined every 100-m rolling. The results are shown in Fig. 3.

As is obvious from Fig. 3, there is almost no change in the surface roughness of the ceramic roll.

No scratch was observed on the roll surface.

## Comparative Example 1

A steel roll having the same dimension of the sintered ceramic dull roll as in Example 1 was used. After rolling was conducted in the same way as in Example 1, the change in the surface roughness of the roll was examined. The initial surface roughness of the steel roll was 9.2 $\mu$m. The results are shown in Fig. 3.

As is obvious from Fig. 3, the surface roughness became smaller in proportion to the rolling length.

## Example 2

20 vol% of TiN having a particle diameter of 1.2 $\mu$m was mixed with sialon having a particle diameter of 0 5 $\mu$m. To 100 parts by volume of the thus-obtained mixture, 3 parts by volume of polyvinyl butyral was mixed as a binder, and the resultant mixture was agglomerated to a particle diameter of 80 $\mu$m by the spray dry method. The powder was pressurized at $1.5 \times 10^5$ bar by using a cold isostatic press to form a pre-molded product about 40 mm in diameter and 350 mm in length as the same size as that of Example 1. After the pre-molded product was heated at 500 °C for 2 hours and degreased, it was sintered at 1,750 °C for 2 hours in nitrogen atmosphere.

The thus-obtained sintered body was cut and ground to form a roll as same as that in Example 1.

The roll had a density of not less than 99% of the theoretical density, an electric resistivity of $6 \times 10^{-2}$ $\Omega$cm, a Vickers hardness of about 1,650 kgf/mm$^2$ ($1.65 \times 10^5$ bar) and a Young's modulus of $3.3 \times 10^6$ bar.

The surface of the roll was subjected to dull treatment by using the electro sparking machine under the same condition as in Example 1, as a result, a dull treatement speed was reduced to 5 $\mu$m/min, one fourth of that in Example 1 and the surface roughness of the roll was rendered to be 14-18 $\mu$m, 1.8 times larger than that of Example 1. These results are considered to be caused by the electric resistivity of the sintered body of the present Example which is two digit order higher than that of Example 1, and to suggest to increase the composition ratio of the second ingredient, an electric conductivity providing material, so long as the mechanical strength of the sintered ceramic roll is satisfied which is subject to the electro spark dull treatment.

A rolling test on the thus-obtained sintered ceramic dull roll was carried out under the same condition as that of Example 1 and showed that the change in the surface roughness of the roll surface with respect to every 100-m rolling was substantially the same as that of Example 1 shown in Fig. 3.

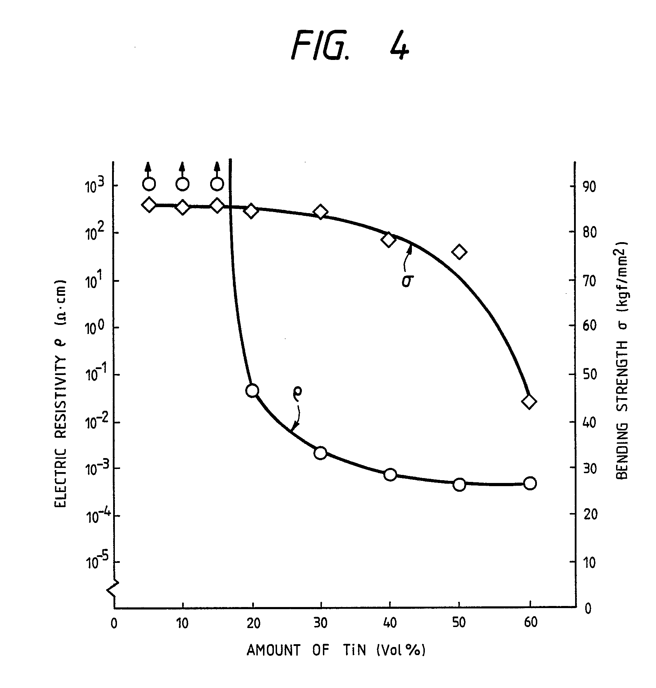

In Fig. 4, electric resistivity and bending strength of several sintered ceramic dull rolls essentially consisting of sialon and TiN, wherein amount of TiN is varied from 5 to 60 vol% and produced in the same manner as that of Example 1, are illustrated. The sintered ceramic roll containing below 15 vol% of TiN exhibited a high electric resistivity substantially the same as that consisting of sialon alone. The sintered ceramic roll containing 20 vol% of TiN showed a reduced electric resistivity in the order of $10^{-2}$ $\Omega$cm, from that amount on, the electric resistivity of the sintered ceramic rolls suddenly decreased along with increase of volume % of TiN and at 50 vol% of TiN, the electric resistivity of the sintered ceramic roll reached to $4 \times 10^{-4}$ $\Omega$cm, however further increase of TiN did not cause further decrease of the electric resistivity of the sintered ceramic rolls. On the other hand, bending strength of the sintered ceramic rolls gradually decreased along with increase of vol% of TiN up to 50 vol%, and after exceeding that amount the bending strength of the sintered ceramic rolls suddenly decreased.

## Example 3

50 vol% of TiN having a particle diameter of 1.2 $\mu$m was mixed with Si$_3$N$_4$ having a particle diameter of 0.6 $\mu$m. To 100 parts by volume of the thus-obtained mixture, 3 parts by volume of the same binder as in Example 1 was mixed, and the resultant mixture was agglomerated to a powder having a particle diameter of 80 $\mu$m. The powder was pressurized at $1.5 \times 10^5$ bar by using a cold isostatic press to form a ceramic roll in the same way as in Example 1. The sintering condition was 1,800 °C and 2 hours.

The thus-obtained sintered body was cut and ground to form a roll of 32 mm in diameter and 275 mm in length having the same shape as in Example 1.

The roll had a density of 98% of the theoretical density, an electric resistivity of $4.2 \times 10^{-4}$ $\Omega$cm, a Vickers hardness of about 1,600 kgf/mm$^2$ ($1.6 \times 10^5$ bar) and a Young's modulus of $3.5 \times 10^6$ bar. Since the Young's modulus of Si$_3$N$_4$ is $2.8 \times 10^6$ bar and the Young's modulus of TiN is $4.2 \times 10^6$ bar, the difference in the Young's modulus is $1.4 \times 10^6$ bar.

The surface of the roll was subjected to dull treatment by using an electro sparking machine under the same condition as in Example 1. In this way, a ceramic dull roll with uniform minute grains formed on the machining surface was obtained. The surface roughness was 7.9 to 8.4 $\mu$m.

The thus-obtained roll was used as a work roll and a mild steel plate was rolled in the same way as in Example 1.

A material being rolled had a thickness of 0.5 mm and a width of 200 mm, and was finished to 0.3 mm by 5-pass rolling.

The change in the surface roughness of the roll surface was examined every 100-m rolling and obtained the results similar to those shown in Fig. 3.

No scratch was observed on the roll surface.

Example 4

50 vol% of TiN was mixed with SiC having a particle diameter of 0.6 $\mu$m. To 100 parts by volume of the thus-obtained mixture, 3 parts by volume of the same binder as in Example 1 was mixed, and the resultant mixture was agglomerated. The powder was pressurized at $1.5 \times 10^5$ bar by using a cold isostatic press to form a ceramic roll in the same way as in Example 1. The sintering condition was $2.0$ to $5.3 \times 10^{-2}$ Pa, $2,100\,^\circ$C and 2 hours.

The thus-obtained sintered body was cut and ground to form a roll of 32 mm in diameter and 275 mm in length having the same shape as in Example 1.

The roll had a density of 98% of the theoretical density, an electric resistivity of $4.3 \times 10^{-4}$ $\Omega$cm, a Vickers hardness of about 1,800 kgf/mm$^2$ and Young's modulus of $4.0 \times 10^6$ bar. Since the Young's modulus of SiC is $4.0 \times 10^6$ bar and the Young's modulus of TiN is $4.2 \times 10^6$ bar, the difference in the Young's modulus is $0.2 \times 10^6$ bar.

The surface of the roll was subjected to dull treatment by using an electro sparking machine under the same condition as in Example 1. In this way, a ceramic dull roll with uniform minute grains formed on the machining surface was obtained. The surface roughness was 7.9 to 8.4 $\mu$m.

The thus-obtained roll was used as a work roll and a mild steel plate was rolled in the same way as in Example 1.

A material being rolled had a thickness of 0.5 mm and a width of 200 mm, and was finished to 0.3 mm by 5-pass rolling.

The change in the surface roughness of the roll surface was examined every 100-m rolling and obtained the results similar to those shown in Fig. 3.

No scratch was observed on the roll surface.

Example 5

50 vol% of TiN was mixed with Al$_2$O$_3$ having a particle diameter of 1 $\mu$m. To 100 parts by volume of the thus-obtained mixture, 3 parts by volume of the same binder as in Example 1 was mixed, and the resultant mixture was agglomerated. The powder was pressurized at $1.5 \times 10^5$ bar by using a cold isostatic press to form a ceramic roll in the same way as in Example 1. The sintering condition was $1,650\,^\circ$C and 2 hours.

The thus-obtained sintered body was cut and ground to form a roll of 32 mm in diameter and 275 mm in length having the same shape as in Example 1.

The roll had a density of 98% of the theoretical density, an electric resistivity of $4.1 \times 10^{-4}$ $\Omega$cm, a Vickers hardness of about 1,650 kgf/mm$^2$ ($1.65 \times 10^5$ bar) and a Young's modulus of $4.1 \times 10^6$ bar. Since the Young's modulus of Al$_2$O$_3$ is $3.9 \times 10^6$ bar and the Young's modulus of TiN is $4.2 \times 10^6$ bar, the difference in the Young's modulus is $0.3 \times 10^6$ bar.

The surface of the roll was subjected to dull treatment by using an electro sparking machine under the same condition as in Example 1. In this way, a ceramic dull roll with uniform minute grains formed on the machining surface was obtained. The surface roughness was 7.9 to 8.4 $\mu$m.

The thus-obtained roll was used as a work roll and a mild steel plate was rolled in the same way as in Example 1.

A material being rolled had a thickness of 0.5 mm and a width of 200 mm, and was finished to 0.3 mm by 5- pass rolling.

The change in the surface roughness of the roll surface was examined every 100-m rolling and obtained the results similar to those shown in Fig. 3.

No scratch was observed on the roll surface.

Comparative Example 2

50 vol% of TiN was mixed with $ZrO_2$ having a particle diameter of 1.2 μm. To 100 parts by volume of the thus-obtained mixture, 3 parts by volume of the same binder as in Example 1 was mixed, and the resultant mixture was agglomerated. The powder was pressurized at $1.5 \times 10^5$ bar by using a cold isostaic press to form a ceramic roll in the same way as in Example 1. The sintering condition was $1,700°$ C and 2 hours.

The thus-obtained sintered body was cut and ground to form a roll of 32 mm in diameter and 275 mm in length having the same shape as in Example 1.

The roll had a density of 98% of the theoretical density, an electric resistivity of $4.2 \times 10^{-4}$ Ωcm, a Vickers hardness of about 1,700 kgf/mm$^2$ ($1.7 \times 10^5$ bar) and Young's modulus of $3.2 \times 10^6$ bar. Since the Young's modulus of $ZrO_2$ is $1.7 \times 10^6$ bar and the Young's modulus of TiN is $4.2 \times 10^6$ bar, the difference in the Young's modulus is $2.5 \times 10^6$ bar.

Micro-structure of the roll surface was examined by using an optical microscope and observed lots of micro- cracks between $ZrO_2$ grains.

The surface of the roll was subjected to dull treatment by using an electro sparking machine under the same condition as in Example 1. In this way, ceramic dull roll with uniform minute grains formed on the machining surface was obtained. The surface roughness was 7.9 to 8.3 μm, but the micro-cracks were grown as 2 to 5 times longer than those before the dull treatment.

The thus-obtained roll was used as a work roll and a mild steel plate was rolled in the same way as in Example 1.

A material being rolled had a thickness of 0.5 mm and a width of 200 mm, and was finished to 0.3 mm by 5-pass rolling.

The change in the surface roughness of the roll surface was examined every 100-m rolling and found out that the surface roughness was increased very much due to dropping away of $ZrO_2$ grains from the roll surface. Therefore the rolling test was stopped on halfway.

No scratch was observed on the roll surface.

The present Comparative Example indicates that the sintered ceramic roll in combination of $ZrO_2$-TiN, whose difference in Young's modulus is more than $2 \times 10^6$ bar is not suitable for the sintered ceramic dull roll of the present invention.

Although electro spark machining was explained as dull treatment in the above-described embodiments, selective electrolytic corrosion or selective chemical corrosion may be adopted for dull treatment when the materials having different electrical properties or chemical properties are selected as the first and second ingredients.

According to the present invention, it is comparatively easy to produce a ceramic roll for a rolling mill having uniform minute grains. Thus, it is possible to obtain a long-life dull roll.

## Claims

1. A ceramic dull roll for rolling mill formed of a non-metallic sintered body essentially consisting of a first ingredient selected at least one from the group consisting of silicon carbide, silicon nitride, sialon alumina and zirconia and a second ingredient selected at least one from the group consisting of the carbides, nitrides, and borides of transition elements of the groups IVa, Va and VIa of the periodic table, having a density of not less than 96% of theoretical density and being made into a shape of a roll, said first and second ingredients are so selected that the difference in the Young's modulus between said first and second ingredients is not more than $2 \times 10^6$ bar, the amount of said second ingredient is so selected that the electric resistivity of said non-metallic sintered body is not more than $1 \times 10^{-1}$ Ωcm and the surface of said roll has a predetermined uniform surface roughness.

2. A ceramic dull roll for rolling mill formed of a non-metallic sintered body according to claim 1, wherein said second ingredient is selected at least one from the group consisting of TiC, TiN, $TiB_2$, ZrC, ZrN, $ZrB_2$, HfC, HfN, $HfB_2$, NbC, NbN, $NbB_2$, TaC, TaN, $TaB_2$, WC and VC.

3. A ceramic dull roll for rolling mill formed of a non-metallic sintered body according to claim 1, wherein the difference in the Young's modulus between said first and second ingredients is not more than $1.5 \times 10^6$ bar and the amount of said second ingredient is so selected that the electric resistivity of said non-metallic sintered body is not more than $1 \times 10^{-2}$ $\Omega$cm.

4. A ceramic dull roll for rolling mill formed of a non-metallic sintered body according to claim 3, wherein said second ingredient is selected at least one from the group consisting of TiC, TiN, $TiB_2$, $ZrB_2$, $HfB_2$, NbC, NbN, $NbB_2$, TaC, TaN and $TaB_2$.

5. A ceramic dull roll for rolling mill formed of a non-metallic sintered body essentially consisting of 80 to 50 vol% of a first ingredient selected at least one from the group consisting of silicon carbide, silicon nitride, sialon, alumina and zirconia and 20 to 50 vol% of a second ingredient selected at least one from the group consisting of TiC, TiN, $TiB_2$, ZrC, ZrN, $ZrB_2$, HfC, HfN, $HfB_2$, NbC, NbN, $NbB_2$, TaC, TaN, $TaB_2$, WC and VC, having a density of not less than 96% of theoretical density and being made into a shape of a roll, said first and second ingredients are so selected that the difference in Young's modulus between said first and second ingredients is not more than $2 \times 10^6$ bar, and the surface of said roll has a uniform surface roughness of not less than 6 $\mu$m.

6. A ceramic dull roll for rolling mill formed of a non-metallic sintered body according to claim 5, wherein the amount of said first ingredient is in the range of 70 to 50 vol%, the amount of said second ingredient is in the range of 30 to 50 vol% and the difference in Young's modulus between said first and second ingredients is not more than $1.5 \times 10^6$ bar.

7. A ceramic dull roll for rolling mill formed of a non-metallic sintered body essentially consisting of 70 to 50 vol% of a first ingredient selected at least one from the group consisting of silicon carbide, silicon nitride, sialon and alumina and 30 to 50 vol% of a second ingredient selected at least one from the group consisting of TiC, TiN, $TiB_2$ and $ZrB_2$, having a density of not less than 96% of theoretical density and being made into a shape of a roll, said first and second ingredients are so selected that the difference in Young's modulus between said first and second ingredients is not more than $1.5 \times 10^6$ bar, the amount of said second ingredient is further so selected that the electric resistivity of said non-metallic sintered body is not more than $1 \times 10^{-3}$ $\Omega$cm and the surface of said roll has a uniform surface roughness of not less than 6 $\mu$m.

8. A method of producing a ceramic dull roll for rolling mill comprising:

a step of pressure molding a powder composition which essentially contains 80 to 50 vol% of a first ingredient selected at least one from the group consisting of silicon carbide, silicon nitride, sialon, alumina and zirconia and 20 to 50 vol% of a second ingredient selected at least one form the group consisting of TiC, TiN, $TiB_2$, ZrC, ZrN, $ZrB_2$, HfC, HfN, $HfB_2$, NbC, NbN, $NbB_2$, TaC, TaN, $TaB_2$, WC and VC, the first and the second ingredients is so selected that the difference in the Young's modulus between the first and second ingredients is not more than $2 \times 10^6$ bar, the average perticle diameter of the first and second ingredients is selected in the range of 0.2 to 50 $\mu$m;

a step of sintering the molded product so as to form a roll of non-metallic sintered body having a density of not less than 96% of theoretical density;

a step of grinding the roll surface of the non-metallic sintered body into a uniform surface roughness of below 2.5 $\mu$ m; and

a step of machining the roll surface by electro spark machining so as to form a uniform surface roughness of not less than 6 $\mu$ m.

FIG. 1

FIG. 2

# FIG. 3

# FIG. 4